(19) Europäisches Patentamt
European Patent Office
Office européen des brevets

(11) EP 3 416 988 B1

(12) EUROPÄISCHE PATENTSCHRIFT

(45) Veröffentlichungstag und Bekanntmachung des Hinweises auf die Patenterteilung:
**27.05.2020 Patentblatt 2020/22**

(21) Anmeldenummer: **17702646.5**

(22) Anmeldetag: **06.02.2017**

(51) Int Cl.:
***C08F 2/22*** *(2006.01)* ***B27N 3/00*** *(2006.01)*
***C08J 5/24*** *(2006.01)*

(86) Internationale Anmeldenummer:
**PCT/EP2017/052488**

(87) Internationale Veröffentlichungsnummer:
**WO 2017/140520 (24.08.2017 Gazette 2017/34)**

# (54) THERMOVERFORMBARES POLYMER/FASER-KOMPOSIT

THERMODEFORMABLE POLYMER/FIBER COMPOSITE

COMPOSITE POLYMÈRE/FIBRE THERMOFORMABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2016 EP 16155723**

(43) Veröffentlichungstag der Anmeldung:
**26.12.2018 Patentblatt 2018/52**

(73) Patentinhaber: **BASF SE**
**67056 Ludwigshafen am Rhein (DE)**

(72) Erfinder:
- **KALBE, Michael**
  **67056 Ludwigshafen (DE)**
- **MICHL, Kathrin**
  **67056 Ludwigshafen (DE)**
- **BRAEUER, Judith**
  **67056 Ludwigshafen (DE)**
- **SCHEIDHAUER, Rainer**
  **67056 Ludwigshafen (DE)**

(74) Vertreter: **BASF IP Association**
**BASF SE**
**G-FLP-C006**
**67056 Ludwigshafen (DE)**

(56) Entgegenhaltungen:
**EP-A1- 2 487 204**
**WO-A1-2008/095900**
**WO-A1-2013/120752**
**DE-A1-102006 001 979**
**DE-A1-102006 006 580**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein Verfahren zur Herstellung eines thermoverformbaren Polymer/Faser-Komposits unter Verwendung eines faserförmigen Substrats und eines Polymeren P, wobei

- das faserförmige Substrat in einen Gasstrom eingebracht wird, danach
- das faserförmige Substrat im Gasstrom mit einer wässrigen Dispersion eines Polymeren P mit einer Glasübergangstemperatur Tg in Kontakt gebracht wird, danach
- das mit der wässrigen Dispersion des Polymeren P in Kontakt gebrachte faserförmige Substrat im Gasstrom getrocknet und anschließend abgeschieden wird, danach
- das erhaltene abgeschiedene faserförmige Substrat in einen Faserflor überführt wird, und danach
- der erhaltene Faserflor bei einer Temperatur ≥ Tg zu einem thermoverformbaren Polymer/Faser-Komposit verdichtet wird, wobei sich die Dichte des Polymer/Faser-Komposits im Vergleich zum entsprechenden Faserflor um einen Faktor ≥ 3 erhöht,

dadurch gekennzeichnet, dass die wässrige Dispersion des Polymeren P durch radikalische initiierte Emulsionspolymerisation eines Gemisches von ethylenisch ungesättigten Monomeren P [Monomere P] in einem wässrigen Medium in Gegenwart eines Polymeren A erfolgt, wobei das Polymere A aus

a) 80 bis 100 Gew.-% wenigstens einer ethylenisch ungesättigten Mono- und/oder Dicarbonsäure [Monomere A1] und
b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

und wobei die Monomeren P in Art und Menge so gewählt werden, dass das erhaltene Polymer P eine Glasübergangstemperatur Tg ≥ 20 °C gemessen nach DIN EN ISO 11357-2 (2013-09) aufweist und wobei unter einem faserförmigen Substrat solche Partikel verstanden werden, deren Verhältnis von ihrer längsten Ausdehnung zu ihrer kürzesten Ausdehnung wenigstens ≥ 5 beträgt.

Gegenstand der vorliegenden Erfindung sind darüber hinaus die nach dem erfindungsgemäßen Verfahren zugänglichen Polymer/Faser-Komposite selbst sowie deren Verwendung zur Herstellung von Polymer/FaserFormteilen, wie beispielsweise Möbelform- oder Wanddekorteile oder Türblätter.

Die Herstellung von Holzfaserplatten erfolgt im Wesentlichen ausgehend von Rundholz, aber auch von Hackschnitzeln oder sogenannten Schwarten. Nach der Entrindung des Rundholzes wird dieses ebenso wie die Schwarten in Trommelhackern zu Hackschnitzeln zerkleinert. Nach der Abtrennung von Verunreinigungen wie Sand oder Steinen werden die Hackschnitzel zuerst in einem Vordämpfbehälter bei 100 °C einer hydrothermischen Vorbehandlung mittels Wasserdampf unterzogen. Daran anschließend werden die vorgedämpften Holzschnitzel in den sogenannten Kocher überführt, wo sie für zwei bis fünf Minuten in Wasser einer Temperatur von 140 bis 180 °C und einem Druck von 4 bis 8 bar (Überdruck) ausgesetzt werden. Danach werden die erweichten Hackschnitzel in den sogenannten Refiner überführt, wo sie ebenfalls bei einem Druck von 4 bis 8 bar (Überdruck) zwischen zwei relativ zueinander in einem Abstand von ca. 3 bis 0,1 mm rotierenden gerillten Mahlscheiben zermahlen und dabei zerfasert werden. Daran anschließend wird der erhaltene wässrige Holzfaserbrei in die sogenannte Blowline überführt, einem Rohr, welches einen deutlich geringeren Druck aufweist, was dazu führt, dass das Wasser verdampft und so als gasförmiges Transportmittel für die Holzfasern durch die Blowline dient (hydropneumatische Förderung). Durch zusätzliches Einblasen von aufgeheizter trockener Luft in die Blowline werden die Holzfasern getrocknet und pneumatisch weitertransportiert. Um einen möglichst gleichmäßigen Auftrag des zur Herstellung der Holzfaserplatten benötigten wässrigen, duroplastisch aushärtenden Bindemittels, wie insbesondere Formaldehydharze, wie Harnstoff/Formaldehyd-, Phenolformaldehyd-, Melaminformaldehyd-, Melamin/Harnstoff/Formaldehyd- oder Melamin/Phenol/Formaldehyd-Harze oder Isocyanate, wie Methylendiisocyanat oder Toluidendiisocyanat auf den Fasern zu gewährleisten, wird das wässrige, duroplastisch aushärtende Bindemittel vor dem Einblasen der aufgeheizten trockenen Luft an einer oder mehreren Stellen in die Blowline eingesprüht. Die nach der Trocknung anfallenden "beleimten" Fasern werden abgeschieden und in einen Faserflor (Fasermatte) überführt. Diese Fasermatte wird gegebenenfalls mittels einer 'kalten' Vorverdichtung komprimiert und anschließend unter Druck und hoher Temperatur (150 bis 230 °C) zu einem plattenförmigen Holzwerkstoff mit einer Dichte von 250 bis 1000 kg/$m^3$ verpresst. Durch die Verwendung duroplastisch härtender Bindemittel sind die so erhaltenen Holzfaserplatten jedoch nicht mehr thermisch verformbar.

Zur Herstellung thermisch verformbarer Formkörper, insbesondere Holzfaserplatten offenbart die WO 2007/73218 ganz allgemein die Verwendung von thermoplastischen Bindemittel in flüssiger oder partikulärer Form. In diesem Zusammenhang werden u.a. auch wässrige Bindemittel-Dispersionen genannt. Als thermoplastische Bindemittel werden jedoch ganz allgemein geeignete Polymere offenbart und dabei in unspezifischer Weise eine Vielzahl völlig unterschiedlicher Polymerer wie beispielsweise Acrylatpolymere, Urethanpolymere, Polyvinylchlorid, Polystyrol, Polyvinylalkohol, Polyamide, Polyester, aber auch Stärken und deren Derivate, Cellulosederivate, Proteine, Polysäuren, Polyisocyanate sowie reaktive Harzsysteme, wie Epoxyharze, ungesättigte Polyester, Urethan/Isocyanat-Harze oder Vorkondensate unterschiedlichster Formaldehydharze etc. genannt. In den Beispielen werden Pellets, Fasern, Pulver oder Schuppen von Polypropylen, säuremodifiziertes Polypropylen, Polymilchsäurefasern, Polyvinylalkohol, Polyolefincopolmer-Dispersionen, wie Ethylen/Acrylsäure- oder Ethylen/Maleinsäureanhydrid-Copolymerdispersionen ohne nähere Spezifizierung verwendet.

Eigene Untersuchungen belegen jedoch, dass nicht alle wässrigen Dispersionen thermoplastischer Polymerer als Bindemittel zur Herstellung von thermoverformbaren Formkörpern geeignet sind, wenn die Mischung eines faserförmigen Substrates mit einer wässrigen Dispersion eines thermoplastischen Polymers in einem Gasstrom, wie sie insbesondere in einer Blowline vorkommt, erfolgen soll. Problematisch ist dabei insbesondere, dass thermoplastische Bindemittel nicht an den Holzfasern anhaften und sich Holzfasern und thermoplastische Bindemittel daher beim bzw. nach dem Trocknen teilweise wieder trennen, wodurch eine homogene und reproduzierbare Bindemittelverteilung auf den Holzfasern und damit homogene und reproduzierbare Eigenschaften der damit erhaltenen Formkörper nicht gewährleistet werden können. Ferner weisen die mit einer wässrigen Dispersion eines thermoplastischen Polymeren hergestellten Formkörper Probleme hinsichtlich einer unerwünschten nachträglichen Verformung unter Temperatureinfluss auf.

Aufgabe für die vorliegende Erfindung war es daher, ein Verfahren zur Herstellung eines thermoverformbaren Formkörpers aus faserförmigen Substraten und einer wässrigen Dispersion eines wirksam anhaftenden Polymeren, welches im Gebrauch eine höhere Temperaturbeständigkeit und somit Gebrauchsfestigkeit aufweist, zur Verfügung zu stellen.

Die Aufgabe wurde überraschend durch das eingangs definierte Verfahren gelöst.

Ein kennzeichnendes Merkmal des erfindungsgemäßen Verfahrens ist, dass ein faserförmiges Substrat in einen Gasstrom eingebracht wird. Erfindungsgemäß können alle faserförmigen Substrate eingesetzt werden. Dabei soll unter einem faserförmigen Substrat solche Partikel verstanden werden, deren Verhältnis von ihrer längsten Ausdehnung zu ihrer kürzesten Ausdehnung wenigstens ≥ 5, vorteilhaft ≥ 10 und insbesondere vorteilhaft ≥ 50 und deren kürzesten Ausdehnung ≤ 2 mm, vorteilhaft ≥ 0,001 und ≤ 0,5 mm und insbesondere vorteilhaft ≥ 0,001 und ≤ 0,1 mm beträgt. Wesentlich ist, dass die kürzeste Ausdehnung in einem Winkel von 90 ° zur Verbindungslinie ihrer längsten Ausdehnung bestimmt wird.

Bei den faserförmigen Substraten kann es sich um Naturfasern, wie pflanzliche, tierische und mineralische Fasern oder um künstlich hergestellte Chemiefasern aus natürlichen oder synthetischen Polymeren handeln. Beispiele für pflanzliche Fasern sind Baumwollfasern, Flachsfasern, Hanffasern, Kenaffasern, Jutefasern, Holzfasern oder Sisalfasern, Beispiele für tierische Fasern sind Wolle oder andere Tierhaare, ein Beispiel für mineralische Fasern ist Steinwolle, ein Beispiel für Chemiefasern natürlichen Ursprungs sind Viskosefasern und Beispiele für Chemiefasern auf Basis synthetischer Polymere sind Polyesterfasern, wie Polytrimethylenterephthalat-, Polyethylennaphthalat-, Polyethylenterephthalat- oder Polybutylenterephthalatfasern sowie die unterschiedlichen Polycarbonatfasern, Polyolefinfasern, wie insbesondere Polyethylen- oder Polypropylenfasern, Polyamidfasern, wie Polycaprolactamfasern (Polyamid 6), Polyamidfasern aus Hexamethylendiamin und Adipinsäure (Polyamid 6,6), Polyamidfasern aus Hexamethylendiamin und Terephthalsäure (Polyamid 6T), Polyamidfasern aus para-Phenylendiamin und Terephthalsäure (Aramid) sowie Mineralfasern, wie Glasfasern, Carbonfasern oder Basaltfasern. Mit Vorteil werden erfindungsgemäß jedoch Naturfasern, insbesondere pflanzlichen Ursprungs und insbesondere vorteilhaft Holzfasern eingesetzt, wie sie insbesondere aus einem Refiner erhalten werden.

Unter einem Gasstrom soll im Rahmen der vorliegenden Erfindung der gerichtete Transport eines gasförmigen Stoffes entlang eines Druckgefälles, beispielsweise in einem Behälter oder in einem Rohr, verstanden werden. Prinzipiell können alle Stoffe eingesetzt werden, welche unter den Transportbedingungen (insbesondere Druck und Temperatur) gasförmig sind. Beispielsweise werden organische und/oder anorganische Lösungsmitteldämpfe, wie insbesondere vorteilhaft Wasserdampf oder stickstoffhaltige Gasgemische, wie insbesondere Luft eingesetzt. Erfindungsgemäß vorteilhaft werden Wasserdampf/Luft-Gemische in breitem Mischungsverhältnis eingesetzt.

Erfindungsgemäß wird das faserförmige Substrat im Gasstrom mit einer wässrigen Dispersion eines Polymeren P mit einer Glasübergangstemperatur Tg in Kontakt gebracht. Erfolgt dieses Inkontaktbringen in einer Blowline, vorteilhaft über ein oder mehrere Einspritzdüsen, so ist darauf zu achten, dass das Inkontaktbringen in der Blowline in Strömungsrichtung an einer Stelle oder mehreren Stellen erfolgt, bevor die aufgeheizte trockene Luft zur Trocknung der Holzfasern eingeblasen wird.

Daran anschließend wird das mit der wässrigen Dispersion des Polymeren P in Kontakt gebrachte faserförmige

Substrat im Gasstrom getrocknet und anschließend abgeschieden. Die Trocknung des erhaltenen faserförmigen Substrats erfolgt beispielsweise durch Abtrennung und Kondensation des Wasserdampfes oder in einer Blowline durch Einbringen von so viel aufgeheizter trockener Luft, dass die relative Luftfeuchtigkeit im resultierenden Gasgemisch auf ≤ 10 % oder sogar ≤ 5 % abgesenkt wird. Durch diese Maßnahme erfolgt die Trocknung des Gemisches aus faserförmigen Substrat und Polymeren P. Unter Trocknung soll im Rahmen dieser Schrift verstanden werden, wenn der Restfeuchtegehalt des Substrat/Polymer-Gemisches auf ≤ 15 Gew.-% und vorteilhaft auf ≤ 10 Gew.-% herabgesetzt wird. Unter Restfeuchtegehalt wird im Rahmen dieser Schrift die prozentuale Gewichtsdifferenz, bezogen auf das eingesetzte Substrat/Polymer-Gemisch, verstanden, welche sich ergibt, wenn man 1 g Substrat/Polymer-Gemisch im Trockenschrank für eine Stunde bei 120 °C trocknet. Die Abscheidung des Substrat/Polymer-Gemisches erfolgt nach den üblichen Methoden zur Feststoffabscheidung aus Gasgemischen, wie beispielsweise durch Siebe oder durch Ausnutzung von Zentrifugalkräften über Zyklonabscheider.

Daran anschließend wird das erhaltene abgeschiedene Substrat/Polymer-Gemisch erfindungsgemäß in einen Faserflor überführt, beispielsweise durch entsprechendes Aufstreuen des abgeschiedenen Substrat/Polymer-Gemisches auf eine Fläche oder im kontinuierlichen Betrieb auf ein Förderband. Dieser Faserflor kann erfindungsgemäß, gegebenenfalls nach einer mechanischen Vorverdichtung bei einer Temperatur deutlich unterhalb der Glasübergangstemperatur Tg, eine Dicke von ≥ 1 und ≤ 50 cm, vorteilhaft ≥ 1 und ≤ 30 cm und insbesondere vorteilhaft ≥ 1 und ≤ 15 cm und eine Dichte von ≥ 20 und ≤ 700 g/l, oft ≥ 50 und ≤ 500 g/l und häufig ≥ 100 und ≤ 350 g/l aufweisen.

Daran anschließend wird der so erhaltene Faserflor bei einer Temperatur ≥ Tg zu einem thermoverformbaren Polymer/Faser-Komposit verdichtet. Dabei wird unter Verdichtung verstanden, wenn der Faserflor bei einer Temperatur ≥ Tg unter Druck zu einem thermoverformbaren Polymer/Faser-Komposit verpresst wird. Dabei erhöht sich die Dichte des Polymer/Faser-Komposits im Vergleich zum entsprechenden Faserflor, abhängig vom eingesetzten faserförmigen Substrat, um einen Faktor ≥ 3 und vorteilhaft um einen Faktor ≥ 6. In entsprechender Weise verringert sich auch die Dicke des Polymer/Faser-Komposits im Vergleich zum entsprechenden Faserflor. Von Bedeutung in diesem Zusammenhang ist, dass das erfindungsgemäße Polymer/Faser-Komposit vorteilhaft eine flächenförmige ebene Form aufweist. Selbstverständlich kann das erfindungsgemäße Polymer/Faser-Komposit aber auch - abhängig von der gewählten Pressform - beliebige nichtebene dreidimensionale Formen aufweisen.

Verfahrenswesentlich ist, dass die wässrige Dispersion des Polymeren P durch radikalisch initiierte Emulsionspolymerisation eines Gemisches von ethylenisch ungesättigten Monomeren P [Monomere P] in einem wässrigen Medium in Gegenwart eines Polymeren A hergestellt wurde, wobei das Polymere A aus

| | |
|---|---|
| 80 bis 100 Gew.-% | wenigstens einer ethylenisch ungesättigten Mono- und/oder Di-carbonsäure [Monomere A1] und |
| 0 bis 20 Gew.-% | wenigstens eines weiteren ethylenisch ungesättigten Monomeren, welches sich von den Monomeren A1 unterscheidet [Monomere A2], |

in einpolymerisierter Form aufgebaut ist.

Als Monomere A1 kommen insbesondere 3 bis 6 C-Atome aufweisende α,β-monoethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure, Maleinsäure und/oder Maleinsäureanhydrid, wobei Acrylsäure insbesondere bevorzugt ist.

Zur Herstellung des erfindungsgemäß eingesetzten Polymeren A kommt als wenigstens ein Monomer A2 insbesondere in einfacher Weise mit Monomer A1 radikalisch copolymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A2 bilden. In aller Regel weisen diese Monomeren in Wasser bei Normalbedingungen [20 °C, 1 atm (absolut)] lediglich eine mäßige bis geringe Löslichkeit auf.

Monomere A2, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren A2 lediglich als modifizierende Monomere in Mengen von $\leq$ 10 Gew.-%, bevorzugt $\leq$ 5 Gew.-% und insbesondere bevorzugt $\leq$ 3 Gew.-%, bezogen auf die Gesamtmenge an Monomeren A2, enthalten.

Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten vernetzenden Monomeren A2 in Mengen von $\leq$ 10 zu Gew.-%, bevorzugt jedoch in Mengen von $\leq$ 5 Gew.-%, jeweils bezogen auf die Gesamtmenge an Monomeren A2, eingesetzt. Insbesondere bevorzugt werden jedoch keinerlei derartige vernetzende Monomeren A2 zu Herstellung des Polymeren A eingesetzt.

Vorteilhaft werden zur Herstellung der Polymeren A als Monomere A2 nur solche Monomerenmischungen eingesetzt, welche zu

| | |
|---|---|
| 90 bis 100 Gew.-% | Ester der Acryl- und/oder Methacrylsäure mit 1 bis 12 C-Atome aufweisenden Alkanolen, oder |
| 90 bis 100 Gew.-% | Styrol und/oder Butadien, oder |
| 90 bis 100 Gew.-% | Vinylchlorid und/oder Vinylidenchlorid, oder |
| 90 bis 100 Gew.-% | Vinylacetat, Vinylpropionat und/oder Ethylen |

enthalten.

Erfindungsgemäß beträgt der einpolymerisierte Anteil an Monomeren A2 im Polymer A 0 bis 20 Gew.-%, vorteilhaft $\leq$ 10 Gew.-% oder $\leq$ 5 Gew.-% und $\geq$ 0,1 Gew.-%. In einer weiteren vorteilhaften Ausführungsform enthält das Polymere A keinerlei Monomeren A2 einpolymerisiert. Dementsprechend ist das Polymere A zu $\geq$ 80 Gew.-%, vorteilhaft zu $\geq$ 90 Gew.-% oder $\geq$ 95 Gew.-% und in einer weiteren Ausführungsform zu 100 Gew.-% aus Monomeren A1 in einpolymerisierter Form aufgebaut, wobei als Monomeren A1 Acrylsäure, Methacrylsäure, Maleinsäure und/oder Maleinsäureanhydrid besonders bevorzugt sind.

Die erfindungsgemäß eingesetzten Polymere A werden in der Regel durch radikalisch initiierte Polymerisation der Monomeren A in einem wässrigen Medium hergestellt. Mit Vorteil erfolgt die Herstellung der Polymeren A in Anwesenheit wenigstens eines Radikalkettenreglers, wobei schwefel-, stickstoff-, und/oder phosphorhaltigen Radikalkettenregler, welche bei 20 °C und 1 atm in entionisiertem Wasser eine Löslichkeit > 5 g/100 g Wasser aufweisen, besonders bevorzugt sind.

Die prinzipielle Herstellung der Polymeren A ist dem Fachmann geläufig (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als schwefelhaltige Radikalkettenregler werden beispielsweise Mercaptoalkanole, wie 2-Mercaptoethanol, 2-Mercaptopropanol oder 3-Mercaptopropanol, Alkalimetallhydrogensulfite, wie Natriumhydrogensulfit oder Kaliumhydrogensulfit, sowie Thioschwefelsäure und deren Alkalimetallsalze oder 3-Mercapto-2-aminopropansäure (Cystein), als stickstoffhaltige Radikalkettenregler beispielsweise Hydroxylamin(ammonium)-Verbindungen, wie Hydroxylammoniumsulfat und als phosphorhaltige Radikalkettenregler beispielsweise phosphorige Säure, hypophosphorige Säure, metaphosphorige Säure, Orthophosphorsäure, Pyrophosphorsäure oder Polyphosphorsäure und deren Alkalimetallsalze, insbesondere deren Natrium- oder Kaliumsalze, vorteilhaft Natriumhypophosphit oder Natriumdihydrogenphosphat eingesetzt.

Insbesondere vorteilhaft ist der Radikalkettenregler ausgewählt unter hypophosphoriger Säure und deren Alkalimetallsalze, insbesondere Natriumhypophosphit, Alkalimetallhydrogensulfite, insbesondere Natriumhydrogensulfit, Hydroxylamoniumsulfat und/oder 2-Mercaptoethanol.

Bei der Herstellung der Polymeren A ist es vorteilhaft, wenn die Menge des Radikalkettenreglers so gewählt wird, dass das zahlenmittlere Molekulargewicht der Polymeren A $\geq$ 1000 und $\leq$30000 g/mol, vorteilhaft $\geq$ 2000 und $\leq$ 20000 g/mol und insbesondere vorteilhaft $\geq$ 3000 und $\leq$ 20000 g/mol beträgt. Die erforderliche Menge des Radikalkettenreglers und die entsprechenden Polymerisationsbedingungen kennt der Fachmann oder kann von diesem in einfachen Routineversuchen ermittelt werden.

Die gewichtsmittleren Molekulargewichte der Polymeren A werden in einer dem Fachmann geläufigen Art und Weise nach DIN 55672-1 gelpermeationschromatographisch (beispielsweise Linearsäule: Supremea M der Firma. PSS, Eluens: 0,08 mol/l TRIS-Puffer pH 7,0, entionisiertes Wasser, Flüssigkeitsstrom: 0,8 ml/min, Detektor: Differentialrefraktometer ERC 7510 der Firma ERC, innerer Standard/Eichsubstanz: Polyacrylsäure-Natriumsalz) bestimmt.

Bei der Herstellung des erfindungsgemäß eingesetzten Polymeren P ist es möglich, gegebenenfalls eine Teil- oder die Gesamtmenge an Polymeren A im wässrigen Polymerisationsmedium vorzulegen. Es ist aber auch möglich, die Gesamtmenge oder die gegebenenfalls verbliebene Restmenge an Polymeren A während der Polymerisationsreaktion gemeinsam mit den Monomeren P zuzudosieren. Die Gesamtmenge oder die gegebenenfalls verbliebene Restmenge an Polymeren A kann dem wässrigen Polymerisationsmedium dabei diskontinuierlich in einer oder mehreren Portionen oder kontinuierlich mit gleichbleibenden oder sich verändernden Mengenströmen zudosiert werden. Vorteilhaft wird die Gesamtmenge an Polymeren A vor Auslösung der Polymerisationsreaktion der Monomeren P im wässrigen Polymerisationsmedium vorgelegt. In einer weiteren vorteilhaften Ausführungsform wird das Polymere A "in-situ" im Polymerisationsmedium für die Polymerisation der Monomeren P hergestellt.

Von Bedeutung ist, dass das wässrige Polymerisationsmedium bei der Herstellung des Polymeren P neben dem Polymeren A zusätzlich noch Dispergierhilfsmittel enthalten kann, welche sowohl die Monomerentröpfchen als auch die durch die radikalisch initiierte Polymerisation der Monomeren P erhaltenen Dispersionsteilchen des Polymeren P in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Da das erfindungsgemäß eingesetzte Polymer A auch als Schutzkolloid wirken kann, werden erfindungsgemäß vorteilhaft keine zusätzlichen Schutzkolloide eingesetzt.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel

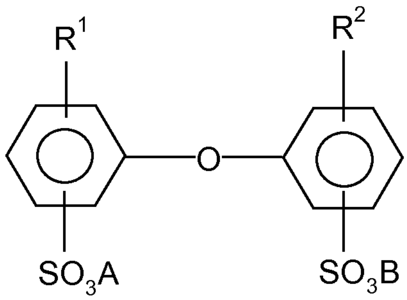

(I)

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Werden bei der Herstellung der wässrigen Dispersion des Polymeren P Dispergierhilfsmittel mitverwendet, so beträgt die Gesamtmenge an eingesetzten Dispergierhilfsmitteln, insbesondere Emulgatoren, 0,1 bis 5 Gew.-%, bevorzugt 1 bis 3 Gew.-%, jeweils bezogen auf die Gesamtmenge der Monomeren P (Gesamtmonomerenmenge P). In einer vorteilhaften Ausführungsform werden Emulgatoren als alleinige Dispergierhilfsmittel eingesetzt.

Werden bei der Herstellung der wässrigen Dispersion des Polymeren P Dispergierhilfsmittel mitverwendet, so ist es möglich, gegebenenfalls eine Teil- oder die Gesamtmenge an Dispergierhilfsmitteln als Bestandteil des das Polymere A enthaltenden wässrigen Mediums vorzulegen. Es ist aber auch möglich, die Gesamtmenge oder die gegebenenfalls verbliebene Restmenge an Dispergierhilfsmitteln während der Polymerisationsreaktion gemeinsam mit den Monomeren P zuzudosieren. Die Gesamtmenge oder die gegebenenfalls verbliebene Restmenge an Dispergierhilfsmitteln kann dem wässrigen Polymerisationsmedium dabei diskontinuierlich in einer oder mehreren Portionen oder kontinuierlich mit gleichbleibenden oder sich verändernden Mengenströmen zudosiert werden.

Erfindungswesentlich ist, dass bei der radikalisch initiierten wässrigen Emulsionspolymerisation der Monomeren P diese in Art und Menge so gewählt wurden, dass das erhaltene Polymere P eine Glasübergangstemperatur Tg $\geq$ 20 °C, vorteilhaft $\geq$ 60 °C und insbesondere vorteilhaft $\geq$ 90 °C gemessen nach DIN EN ISO 11357-2 (2013-09) aufweist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich die Herstellung einer erfindungsgemäß eingesetzten wässrigen Dispersion des Polymeren P lediglich dadurch, dass die Monomeren P in Anwesenheit wenigstens eines Polymeren A polymerisiert werden und dabei in Art und Menge so gewählt werden, dass die gebildeten Polymeren P eine Glasübergangstemperatur Tg $\geq$ 20 °C gemessen nach DIN EN ISO 11357-2 (2013-09) aufweisen. Dabei ist es selbstverständlich, dass zur Herstellung der Polymere P im Rahmen der vorliegenden Schrift auch die dem Fachmann geläufigen Saat-, Stufen- und Gradientenfahrweisen mit umfasst sein sollen. Werden Stufenpolymere eingesetzt, so weist wenigstens das Polymere einer Stufe eine Glasübergangstemperatur Tg $\geq$ 20 °C auf. Mit Vorteil weisen wenigstens 50 Gew.-% und mit besonderem Vorteil wengistens 90 Gew.-% des Stufenpolymers ein Polymer P mit einer Glasübergangstemperatur Tg $\geq$ 20 °C, vorteilhaft $\geq$ 60 °C und insbesondere vorteilhaft $\geq$ 90 °C

auf. Erfindungsgemäß vorteilhaft werden jedoch Einstufenpolymere mit einer Glasübergangstemperatur Tg ≥ 20 °C, vorteilhaft ≥ 60 °C und insbesondere vorteilhaft ≥ 90 °C als Polymere P eingesetzt.

Als Monomere P kommen insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren. Die genannten Monomere bilden in der Regel die Hauptmonomeren, die, bezogen auf die zur Herstellung des Polymeren P eingesetzte Menge aller Monomeren P (Gesamtmonomerenmenge P), einen Anteil ≥ 80 Gew.-% und bevorzugt ≥ 90 Gew.-% auf sich vereinen. In aller Regel weisen diese Monomeren in Wasser bei Normalbedingungen [20 °C, 1 atm (= 1,013 bar absolut)] lediglich eine mäßige bis geringe Löslichkeit auf.

Monomere P, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-Aminoethylacrylat, 2-Aminoethylmethacrylat, 2-Aminopropylacrylat, 2-Aminopropylmethacrylat, 3-Aminopropylacrylat, 3-Aminopropylmethacrylat, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren P lediglich als modifizierende Monomere in Mengen ≤ 10 Gew.-% und bevorzugt ≤ 5 Gew.-%, bezogen auf die Gesamtmonomerenmenge P, enthalten.

Monomere P, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie 1,2-, 1,3- oder 1,4-Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C1-C8-Hydroxyalkylester wie 2-Hydroxyethyl-, 2-Hydroxypropyl-, 3-Hydroxy- oder 4-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen ≤ 10 Gew.-%, bevorzugt jedoch in Mengen ≤ 5 Gew.-%, jeweils bezogen auf die Gesamtmonomerenmenge P, eingesetzt.

In einer bevorzugten Ausführungsform sind die Monomeren P bei der Herstellung der Polymeren P zu ≥ 90 Gew.-% ausgewählt aus der Gruppe umfassend Olefine, vinylaromatische Monomere, Vinylhalogenide, Ester aus Vinylalkohol und 1 bis 18 C-Atome aufweisenden Monocarbonsäuren, Ester aus 3 bis 6 C-Atome aufweisenden α,β-monoethylenisch ungesättigten Mono- und Dicarbonsäuren mit 1 bis 12 C-Atome aufweisenden Alkanolen, Nitrile α,β-monoethylenisch ungesättigter Carbonsäuren sowie $C_{4-8}$-konjugierte Diene und zu ≤10 Gew.-% ausgewählt sind aus der Gruppe umfassend 3 bis 6 C-Atome aufweisende α,β-monoethylenisch ungesättigte Mono- und Dicarbonsäuren und deren Amide, sowie monoethylenisch ungesättigte Verbindungen, welche wenigstens eine Amino-, Epoxy-, Hydroxy-, N-Methylol- oder Carbonylgruppe aufweisen und Verbindungen, welche wenigstens zwei nicht konjugierte ethylenisch ungesättigte Doppelbindungen aufweisen.

In einer weiteren bevorzugten Ausführungsform werden zur Herstellung des Polymeren P

| | |
|---|---|
| ≥ 90 und ≤ 99,9 Gew.-% | Styrol und/oder Methylmethacrylat, |

(fortgesetzt)

| | |
|---|---|
| ≥ 0 und ≤ 9,9 Gew.-% | n-Butylacrylat und/oder 2-Ethylhexylacrylat, und |
| ≥ 0,1 und ≤ 10,0 Gew.-% | Acrylsäure, Methacrylsäure, Glycidylacrylat, Glycidylmethacrylat, 2-Hydroxyethyl-, 2-Hydroxypropyl- und 3-Hydroxypropyl-, 2-Aminoethyl-, 2-Aminopropyl- und 3-Aminopropylacrylat und -methacrylat, 1,4-Butylenglykoldiacrylat und -methacrylat, 1,2-, 1,3- und 1,4-Divinylbenzol, Allylacrylat und/oder Allylmethacrylat |

eingesetzt, wobei sich die Mengen zu 100 Gew.-% aufsummieren.

In einer weiteren bevorzugten Ausführungsform werden zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat |

eingesetzt, wobei sich die Mengen zu 100 Gew.-% aufsummieren.

In einer besonders bevorzugten Ausführungsform werden zur Herstellung des Polymeren P

| | |
|---|---|
| ≥ 90 und ≤ 99,7 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 5,0 Gew.-% | Acrylsäure, Methacrylsäure, 2-Hydroxyethyl-, 2-Hydroxypropyl-und 3-Hydroxypropyl-, 2-Aminoethyl-, 2-Aminopropyl- und 3-Aminopropylacrylat und/oder - methacrylat, |
| ≥ 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat, sowie |
| ≥ 0,1 und ≤ 3,0 Gew.-% | Glycidylacrylat und/oder Glycidylmethacrylat, |

eingesetzt, wobei sich die Mengen zu 100 Gew.-% aufsummieren.

Die radikalisch initiierte wässrige Emulsionspolymerisation zur Herstellung der Polymeren P wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge P, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder DiCumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Neben der saatfreien Herstellungsweise kann zur Einstellung der Polymerteilchengröße die Emulsionspolymerisation zur Herstellung der Polymeren P nach dem Saatlatex-Verfahren oder in Gegenwart einer in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerdispersion im wässrigen Polymerisationsmedium vorzulegen und dann die Monomeren P in Gegenwart der Saatlatex zu polymerisieren. Hierbei wirken die Saat-Polymerteilchen als 'Polymerisationskeime' und entkoppeln die Polymerteilchenbildung und das Polymerteilchenwachstum. Während der Emulsionspolymerisation kann prinzipiell weiterer Saatlatex direkt dem wässrigen Polymerisationsmedium zugegeben werden. Hierdurch werden breite Größenverteilungen der Polymerteilchen erreicht, die insbesondere bei Polymerdispersionen mit hohem Feststoffgehalt oftmals erwünscht sind (vgl. hierzu beispielsweise DE-A 4213965). Anstelle der Zugabe einer definierten Saatlatex kann dieser auch in situ erzeugt werden. Hierzu wird beispielsweise eine Teilmenge der zur Polymerisation eingesetzten Monomeren P und des Radikalinitiators zusammen mit einer Teil- oder der Gesamtmenge des Polymeren A sowie gegebenenfalls zusätzlichen Dispergierhilfsmitteln vorgelegt und auf Reaktionstemperatur erwärmt, wobei eine relativ feinteilige Polymersaat entsteht. Anschließend wird im gleichen wässrigen Polymerisationsmedium die eigentliche Polymerisation nach dem Zulaufverfahren durchgeführt (siehe auch DE-A 4213965).

Vorteilhaft erfolgt die Herstellung der Polymeren P durch radikalisch initiierten wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation der Monomeren bei 1 atm (= Atmosphärendruck = 1,013 bar absolut) oder unter erhöhtem Druck unter Inertgasatmosphäre, wie beispielsweise unter Stickstoff oder Argon durchgeführt.

Bei der radikalisch initiierten wässrigen Emulsionspolymerisation kann das wässrige Polymerisationsmedium prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt erfolgt die radikalisch initiierte wässrige Emulsionspolymerisation jedoch in Abwesenheit solcher Lösungsmittel.

Die erfindungsgemäß eingesetzten Polymere P weisen eine Glasübergangstemperatur Tg ≥ 20 °C gemessen nach DIN EN ISO 11357-2 (2013-09) auf. Mit Vorteil liegt die Glasübergangstemperatur der Polymeren P im Bereich ≥ 60 °C, insbesondere im Bereich ≥ 60 und ≤ 150 °C und mit besonderem Vorteil im Bereich ≥ 90 °C, insbesondere im Bereich ≥ 90 und ≤ 120 °C.

Von Bedeutung ist ferner, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach folgender Gleichung abgeschätzt werden kann

$$1/Tg = x_1/Tg^1 + x_2/Tg^2 + .... x_n/Tg^n,$$

wobei $X_1$, $X_2$, .... $X_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook Ist Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Die durch Emulsionspolymerisation zugänglichen wässrigen Dispersionen des Polymeren P weisen üblicherweise einen Feststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf.

Mit besonderem Vorteil liegen die Polymeren P in Form von Teilchen mit einem mittleren Teilchendurchmesser ≥ 10 und ≤1000 nm, vorteilhaft ≥ 30 und ≤ 600 nm und besonders vorteilhaft ≥ 100 bis ≤ 500 nm, bestimmt nach der Methode der quasielastische Lichtstreuung (ISO-Norm 13 321; cumulant z-average), vor.

Erfindungsgemäß liegt das Gewichtsverhältnis von Polymeren P (berechnet als Gesamtmenge an Monomeren P) zu Polymeren A im Bereich ≥ 1 und ≤ 10, vorteilhaft im Bereich ≥ 1,5 und ≤ 8 und insbesondere im Bereich ≥ 2 und ≤ 6.

Bei der Herstellung des Polymer/Faser-Komposits werden vorteilhaft ≥ 1 und ≤ 50 g und mit besonderem Vorteil

≥ 5 und ≤ 25 g an Polymeren P (gerechnet als Summe von Polymeren A und der Gesamtmenge an Monomeren P), bezogen auf 100 g an faserförmigen Substrat eingesetzt.

Nach dem erfindungsgemäßen Verfahren sind insbesondere thermoverformbare Polymer/Faser-Komposite zugänglich, deren Flächengewicht ≥ 1000 und ≤ 30000 g/$m^2$, insbesondere vorteilhaft ≥ 1000 und ≤ 20000 g/$m^2$ und mit Vorteil ≥ 1000 und ≤ 10000 g/$m^2$ aufweisen. Dabei sind die nach dem erfindungsgemäßen Verfahren erhältlichen thermoverformbaren Polymer/Faser-Komposite in einer bevorzugten Ausführungsform flächenförmig während sie in einer weiteren bevorzugten Ausführungsform eine nichtflächenförmige dreidimensionale Struktur aufweisen.

Erfindungsgemäß umfasst sind auch die thermoverformbaren Polymer/Faser-Komposite, wie sie nach dem erfindungsgemäßen Verfahren erhältlich sind.

In entsprechender Weise ist auch die Verwendung eines erfindungsgemäßen thermoverformbaren Polymer/Faser-Komposits zur Herstellung eines Polymer/Faser-Formteils erfindungsgemäß umfasst, welches sich in seiner Form vom eingesetzten thermoverformbaren Polymer/Faser-Komposit unterscheidet.

Dementsprechend ist erfindungsgemäß auch ein Verfahren zur Herstellung eines Polymer/Faser-Formteils umfasst, welches dadurch gekennzeichnet ist, dass ein erfindungsgemäßes thermoverformbares Polymer/Faser-Komposit auf eine Temperatur ≥ Tg aufgeheizt wird, das so erhaltene Polymer/Faser-Komposit bei einer Temperatur ≥ Tg in die gewünschte Form des Polymer/Faser-Formteils gebracht wird und danach das erhaltene Polymer/Faser-Formteil unter Beibehaltung seiner Form auf eine Temperatur < Tg abgekühlt wird.

Erfindungsgemäß erfolgt das Aufheizen des Polymer/Faser-Komposits auf eine Temperartur, welche wenigstens der Glasübergangstemperatur Tg des Polymeren P entspricht. Mit Vorteil wird das Polymer/Faser-Komposit auf eine Temperatur Tg + ≥ 10 °C und mit besonderem Vorteil Tg + ≥ 30 °C aufgeheizt.

Von Bedeutung ist ferner, dass die Herstellung des Polymer/Faser-Formteils in einer Ausführungsform mittels einer beheizten Formpresse erfolgt, deren Kontaktfläche eine Temperatur ≥ Tg aufweist und deren Form der negativen Form des Polymer/Faser-Formteils entspricht und dessen Abkühlung außerhalb der Formpresse erfolgt. Aufheizvorgang und Verformungsvorgang erfolgen in dieser Ausführungsform in der beheizten Formpresse. Selbstverständlich ist es erfindungsgemäß auch möglich, dass das Polymer/Faser-Komposit außerhalb der Formpresse auf eine Temperatur ≥ Tg aufgeheizt und anschließend in der Formpresse ohne weitere Heizung zu den Polymer/Faser-Formteil verformt wird. In dieser Ausführungsform erfolgt der Aufheiz- und der Verformungsvorgang separat.

In einer vorteilhaften Ausführungsform erfolgt das erfindungsgemäße Verfahren dergestalt, dass vor oder nach dem Aufheizvorgang aber vor dem Verformungsschritt noch ein Verfahrenszwischenschritt durchgeführt wird, in welchem auf die eine und/oder die andere Oberfläche des Polymer/Faser-Komposits ein flächenförmiges Dekormaterial mit einer Dicke ≤ 10 mm aufgebracht wird.

Beim dem erfindungsgemäß einsetzbaren Dekormaterial handelt es sich vorteilhaft um ein textiles Flächengebilde, wie beispielsweise ein Vliesstoff, ein Gewebe oder ein Gewirke aus natürlichen oder synthetischen Fasern, eine Kunststofffolie, wie beispielsweise eine thermoplastische Polyvinylchlorid-, Polyolefin- oder Polyesterfolie, ein geschäumtes Flächengebilde, wie beispielsweise ein Flächengebilde aus einem Polyolefin- oder einem Polyurethanschaum, ein geschäumtes Flächengebilde, welches seinerseits auf der nicht mit dem aufgeheizten Polymer/Faser-Komposit in Kontakt kommenden Oberfläche mit einem textilen Flächengebilde, einer Kunststofffolie oder einem weiteren geschäumten Flächengebilde beschichtet (kaschiert) ist oder um ein Holzfunier.

Das flächenförmige Dekormaterial weist in der Regel eine Dicke ≤ 10 mm auf. Handelt es sich bei dem flächenförmigen Dekormaterial um ein textiles Flächengebilde oder eine Kunststofffolie, so beträgt deren Dicke in der Regel ≤ 3 mm, häufig vorteilhaft ≤ 2 mm und häufig insbesondere vorteilhaft ≤ 1 mm. Handelt es sich jedoch bei dem flächenförmigen Dekormaterial um ein geschäumtes Flächengebilde oder ein beschichtetes (kaschiertes) geschäumtes Flächengebilde, so beträgt deren Dicke häufig ≤ 8 mm, oft ≤ 5 mm und besonders oft ≤ 3 mm. Handelt es sich bei dem flächenförmigen Dekormaterial jedoch um ein Holzfunier, so beträgt dessen Dicke in der Regel ≤ 3 mm, häufig vorteilhaft ≤ 2 mm und häufig insbesondere vorteilhaft ≤ 1 mm.

Erfindungsgemäß sind daher auch die nach vorgenanntem Verfahren zugänglichen Polymer/Faser-Formteile umfasst.

Erfindungsgemäß ist ferner von Bedeutung, dass sowohl das Verfahren zur Herstellung des thermoverformbaren Polymer/Faser-Komposits, wie auch das Verfahren zur Herstellung des Polymer/Faser-Formteils kontinuierlich oder diskontinuierlich erfolgen können.

Die erfindungsgemäß zugänglichen Polymer/Faser-Formteile weisen eine gute Thermodimensionsstabilität auf und eigenen sich daher vorteilhaft als Bauelement im Fahrzeugbau, wie beispielsweise als Türinsert, Türdekorträger, Kniefänger, Handschuhfach, Hutablage, Sonnenblende, Mittelkonsole, Kofferraumverkleidung oder Sitzrückenverkleidung, in Bauwerken, wie beispielsweise als Raumteiler, Trennwand, Deckenplatte oder Wanddekorteil und in Möbeln als Möbelformteil, wie beispielsweise als Sitz- oder Rückenfläche, wobei die Verwendung als Wanddekorteil oder Möbelformteil besonders bevorzugt sind.

Die Erfindung soll durch nachfolgende nichteinschränkende Beispiele erläutert werden.

Beispiele

Herstellung einer wässrigen Polymer P1-Dispersion in Anwesenheit eines Polymeren A (Dispersion 1)

In einem 500 l-Technikumsreaktor, ausgerüstet mit einem Rührer, einem Rückflusskühler und Dosiereinrichtungen wurden bei 20 bis 25 °C (Raumtemperatur) und unter Stickstoffatmosphäre 36,5 kg entionisiertes Wasser vorgelegt und bei Atmosphärendruck (1,013 bar absolut) unter Rühren auf 95 °C aufgeheizt. Nach Erreichen dieser Temperatur wurden innerhalb von 10 Minuten 14,0 kg einer 7 gew.-%igen wässrigen Lösung von Natriumpersulfat kontinuierlich unter Rühren zudosiert. Anschließend wurden, jeweils gleichzeitig beginnend, eine Mischung aus 61,6 kg Acrylsäure, 3,2 kg Methylmethacrylat und 40,5 kg entionisiertem Wasser innerhalb von 70 Minuten, sowie eine Mischung aus 14,0 kg einer 40 gew.-%igen wässrigen Lösung Natriumhydrogensulfit und 1,4 kg entionisiertem Wasser ebenfalls innerhalb von 70 Minuten und 32,5 kg einer 7 gew.-%igen wässrigen Lösung von Natriumpersulfat innerhalb von 75 Minuten kontinuierlich mit gleichbleibenden Mengenströmen unter Rühren und unter Aufrechterhaltung der vorgenannten Temperatur dem Reaktionsgefäß zudosiert. Anschließend wurde das Polymerisationsgemisch weitere 5 Minuten gerührt und dann auf 93 °C abgekühlt. Danach wurden unter Rühren innerhalb von 10 Minuten 13,9 kg 25 gew.-%ige Natronlauge zudosiert und damit ein pH-Wert von 3,3 eingestellt, gefolgt von weiteren 5 Minuten Rühren. Anschließend wurde Zulauf 1 innerhalb von 170 Minuten zudosiert, wobei zuerst 48 Gew.-% von Zulauf 1 innerhalb von 20 Minuten und dann 52 Gew.-% von Zulauf 1 innerhalb von 150 Minuten zugegeben wurden - jeweils kontinuierlich mit gleichbleibendem Mengenströmen. Zulauf 1 bestand aus 21,8 kg einer 7 gew.-%igen wässrigen Lösung aus Natriumpersulfat. 5 Minuten nach Start von Zulauf 1 wurde Zulauf 2 innerhalb von 150 Minuten kontinuierlich mit gleichbleibendem Mengenstrom unter Beibehaltung der vorgenannten Polymerisationstemperatur zudosiert. Zulauf 2 bestand aus einer homogenen Emulsion, hergestellt aus 28,4 kg entionisiertem Wasser, 3,86 kg einer 28 gew.-%igen wässrigen Lösung von Natriumlaurylethersulfat (Disponil® FES 27; Produkt der Fa. BASF SE), 2,88 kg einer 15 gew.-%igen wässrigen Lösung von Natriumdodecylsulfat (Disponil® SDS 15; Produkt der Fa. BASF SE), 4,54 kg Glycidylmethacrylat, 1,06 kg 1,4-Butandioldiacrylat, 57,00 g Methylmethacrylat, 86,48 kg Styrol und 2,12 kg Acrylsäure. Nach beendeter Zugabe von Zulauf 1 wurde noch 10 Minuten weiter gerührt. Anschließend wurden 108 g eines Entschäumers (TEGO® Foamex 822; Produkt der Fa. Evonik Resource Efficiency GmbH) zugegeben. Danach wurde das Polymerisationsgemisch auf 90 °C abgekühlt und die Zuläufe 3 und 4 gleichzeitig beginnend kontinuierlich mit gleichbleibenden Mengenströmen innerhalb von 30 Minuten zugegeben. Zulauf 3 bestand aus 650 g einer 10 gew.-%igen wässrigen Lösung von tert.-Butylhydroperoxid und Zulauf 4 bestand aus 820 g einer 13,1 gew.-%igen wässrigen Lösung von Acetonbisulfit (molares 1:1-Additionsprodukt aus Aceton und Natriumhydrogensulfit). Danach wurde das erhaltene Polymerisationsgemisch auf Raumtemperatur abgekühlt und über einen 125 µm-Filter filtriert. Die erhaltene wässrige Polymerisatdispersion wies einen Feststoffgehalt von 53,5 Gew.-% auf. Die zahlenmittlere Teilchengröße wurde zu 347 nm und die Glasübergangstemperatur zu 103 °C bestimmt.

Der Feststoffgehalt wurde generell mit einem Feuchtebestimmer der Firma Mettler Toledo durch Trockung von 0,5 bis 1 g einer erhaltenen Polymerisatdispersion oder Polymerisatlösung bei 140 °C bis zur Gewichtskonstanz bestimmt.

Die Glasübergangstemperatur wurde generell mit Hilfe eines Differentialkalorimeters Q 2000 der Firma TA Instruments bestimmt. Die Heizrate betrug 10 K pro Minute.

Die zahlenmittlere Teilchengröße der Dispersionsteilchen wurde generell durch dynamische Lichtstreuung an einer 0,005 bis 0,01 gew.-%igen wässrigen Dispersion bei 23 °C mittels des Autosizers IIC der Firma Malvern Instruments, England, ermittelt. Angegeben wird der mittlere Durchmesser der Kumulantenauswertung (cumulant z-average) der gemessenen Autokorrelationsfunktion (ISO-Norm 13321).

Die pH-Werte wurden generell durch Messung einer Probe mit einer pH-Elektrode der Firma Schott bei Raumtemperatur bestimmt.

Herstellung einer wässrigen Polymer A-Lösung (Vergleichslösung)

In einem 200 l-Technikumsreaktor, ausgerüstet mit einem Rührer, einem Rückflusskühler und Dosiereinrichtungen wurden bei Raumtemperatur und unter Stickstoffatmosphäre 36,5 kg enionisiertes Wasser vorgelegt und bei Atmosphärendruck unter Rühren auf 95 °C aufgeheizt. Nach Erreichen dieser Temperatur wurde innerhalb von 10 Minuten 14,0 kg einer 7 gew.-%igen wässrigen Lösung von Natriumpersulfat kontinuierlich unter Rühren zudosiert. Anschließend wurden, gleichzeitig beginnend, eine Mischung aus 61,6 kg Acrylsäure, 3,2 kg Methylmethacrylat und 40,5 kg entionisiertem Wasser innerhalb von 70 Minuten, sowie eine Mischung aus 14,0 kg einer 40 gew.-%igen wässrigen Lösung von Natriumhydrogensulfit und 1,4 kg entionisiertem Wasser ebenfalls innerhalb von 70 Minuten und 32,5 kg einer 7 gew.-%igen wässrigen Lösung von Natriumpersulfat innerhalb von 75 Minuten kontinuierlich mit gleichbleibenden Mengenströmen unter Rühren und unter Aufrechterhaltung der vorgenannten Polymerisationstemperatur dem Reaktionsgefäß zudosiert. Anschließend wurde das Polymerisationsgemisch weitere 5 Minuten gerührt und dann auf Raumtemperatur abgekühlt. Die erhaltene Polymerlösung hatte einen pH-Wert von 1,3 und wies einen Feststoffgehalt

von 36,6 Gew.-% auf. Die Viskosität wurde zu 20 mPas bestimmt. Das zahlenmittlere Molekulargewicht Mn der erhaltenen Polycarbonsäure betrug 2560 g/mol und das gewichtsmittlere Molekulargewicht Mw 6150 g/mol.

Die Viskosität wurde nach dem Brookfield-Verfahren (ISO 2555, 1989) bei 23 °C bestimmt.

Die Molekulargewichtsbestimmung erfolgte unter Verwendung von zwei in Reihe geschalteten TSKgel G 3000 PWXL-Säulen der Firma Tosoh bei einer Temperatur von 35 °C, einem Elutionsmittel (entionisiertes Wasser mit 0,01 mol/l Phosphatpuffer pH-Wert 7,4 und 0,01 mol/l $NaN_3$), einer Durchflußgeschwindigkeit von 0,5 ml pro Minute, einer Injektionsmenge von 100 µl, einer Konzentration der injizierten Lösung von 1 bis 2 mg pro ml sowie einem DRI-Detektor der Firma Agilent Technologies GmbH.

Herstellung einer wässrigen Polymer P-Dispersion in Abwesenheit eines Polymeren A (Vergleichsdispersion)

In einem 500 l-Technikumsreaktor, ausgerüstet mit einem Rührer, einem Rückflusskühler und Dosiereinrichtungen wurde bei Raumtemperatur und unter Stickstoffatmosphäre ein Gemisch bestehend aus 70,0 kg entionisiertem Wasser und 1,21 kg einer wässrigen Polystyrolsaatlatex (Feststoffgehalt 33 Gew.-%, mittlerer Teilchendurchmesser 30 nm) vorgelegt und bei Atmosphärendruck unter Rühren auf 93 °C aufgeheizt. Anschließend wurden 5 Gew.-% von Zulauf 1 in die Vorlage eindosiert. Nach 5 Minuten wurden, gleichzeitig beginnend, der Rest von Zulauf 1 sowie die Gesamtmenge von Zulauf 2 kontinuierlich mit gleichbleibenden Mengen zudosiert, wobei der Rest von Zulauf 1 innerhalb von 195 Minuten und die Gesamtmenge von Zulauf 2 innerhalb von 180 Minuten zudosiert wurden. Zulauf 1 bestand aus 21,6 kg einer 7 gew.-%igen wässrigen Lösung aus Natriumpersulfat. Zulauf 2 bestand aus einer homogenen Emulsion, hergestellt aus 65,9 kg entionisiertem Wasser, 4,00 kg einer 28 gew.-%igen wässrigen Lösung von Natriumlaurylethersulfat, 3,20 kg einer 15 gew.-%igen wässrigen Lösung von Natriumdodecylsulfat, 4,80 kg Glycidylmethacrylat, 1,12 kg 1,4-Butandioldiacrylat, 60,32 kg Methylmethacrylat, 91,52 kg Styrol und 2,24 kg Acrylsäure. Nach beendeter Zugabe von Zulauf 1 wurde noch 15 Minuten weiter gerührt. Anschließend wurden 110 g des Entschäumers TEGO® Foamex 822 zugegeben. Danach wurde die erhaltene wässrige Polymerisatdispersion auf 90 °C abgekühlt und danach die Zuläufe 3 und 4 gleichzeitig beginnend innerhalb von 30 Minuten kontinuierlich mit gleichbleibenden Mengenströmen zugegeben. Zulauf 3 bestand aus 800 g einer 10 gew.-%igen wässrigen Lösung von tert.-Butylhydroperoxid und Zulauf 4 bestand aus 860 g einer 13,1 gew.-%igen wässrigen Lösung von Acetonbisulfit. Danach wurde die erhaltenen wässrige Polymerisatdispersion auf Raumtemperatur abgekühlt und über einen 125 µm-Filter filtriert. Die erhaltene wässrige Polymerisatdispersion wies einen Feststoffgehalt von 50 Gew.-% auf. Die zahlenmittlere Teilchengröße wurde zu 353 nm und die Glasübergangstemperatur wurde zu 107 °C bestimmt.

Herstellung einer wässrigen Polymer P2-Dispersion in Anwesenheit eines Polymeren A (Dispersion 2)

Die Herstellung von Dispersion 2 erfolgte völlig analog zur Herstellung von Dispersion 1 mit dem Unterschied, dass in Zulauf 2 4,54 kg Glycidylacrylat anstelle von Glycidylmethacrylat, 1,06 kg Allylmethacrylat anstelle 1,4-Butandioldiacrylat und 2,12 kg 2-Hydroxyethylacrylat anstelle von Acrylsäure eingesetzt wurden.

Die erhaltene wässrige Polymerisatdispersion wies einen Feststoffgehalt von 52,7 Gew.-% auf. Die zahlenmittlere Teilchengröße wurde zu 321 nm und die Glasübergangstemperatur wurde zu 104 °C bestimmt.

Anwendungstechnische Untersuchungen

Die Versuche wurden mit einem 12 Zoll-Refiner der Firma Antriz und einer damit verbundenen Blowline durchgeführt. Dabei wurde der Refiner bei 160 bis 170 °C und einem Innendruck von 5 bis 6 bar (Überdruck) betrieben. Der Abstand zwischen den beiden Mahlplatten betrug 0,3 mm, wobei eine der Mahlplatten mit 3000 Umdrehungen pro Minute betrieben wurde. Die mit dem Refiner über einen Flunsch verbundene Blowline (Stahlrohr) wies einen Innendurchmesser von 3 cm und eine Rohrlänge von 30 m auf. Über eine 0,2 mm Düse, welche in einem Abstand von 50 cm vom Refinerausgang / Blowlineeingang in der Blowlinewand eingelassen war, wurden dann die wässrigen Bindemittel mit 2 bar (Überdruck) in die Blowline eingedüst. Am Ende der Blowline befand sich ein Zyklonabscheider, über den die beschichteten Holzfasern weiter getrocknet, auf eine Temperatur von ca. 80 °C abgekühlt und in einen offenen Behälter abgeschieden wurden.

Für die Untersuchungen wurden mit 160 bis 170 °C heißem Wasser/Dampf bei 5 bis 6 bar Überdruck in einem Kocher vorbehandelte Fichte-Hackschnitzel eingesetzt, wobei der Massenstrom an Holzschnitzel in den Refiner (bzw. Holzfasern in die Blowline) auf 30 kg pro Stunde eingestellt wurde.

Als Bindemittel wurden die Dispersionen 1 und 2 sowie die Vergleichslösung und die Vergleichsdispersion eingesetzt. Dabei wurden die Bindemittel mittels einer Exzenterschneckenpumpe mit einem Druck von 2 bar (Überdruck) über die 0,2 mm Düse in die Blowline eingedüst, wobei die Massenströme auf jeweils 4,8 kg Bindemittel (als Feststoff gerechnet) pro Stunde einjustiert wurden. Für jedes Bindemittel erfolgte ein Versuch über 2 Stunden im kontinuierlich stationären Zustand, wobei während dieser Zeit die mit dem jeweiligen Bindemittel besprühten Holzfasern in dem offenen

Behälter gesammelt wurden.

Nach ca. 1 Stunde im kontinuierlichen stationären Betrieb wurden von den aus dem Zyklonabscheider in den offenen Behälter fallenden Holzfasern durch Einschieben eines schwarzen Papiers Holzfasern entnommen. Dabei wurde mit bloßem Auge eine erste visuelle Beurteilung hinsichtlich des nicht an den Fasern gebundenen Bindemittels vorgenommen, welches als weißer Feinstaub auf dem schwarzen Papier erkennbar war. Des Weiteren wurden die erhaltenen Fasern einer mikroskopischen Beurteilung bei 60-facher Vergrößerung unterzogen wurden. Die dabei mit den unterschiedlichen Bindemitteln erhaltenen Ergebnisse sind in nachfolgender Tabelle 1 aufgelistet.

Tabelle 1: Ergebnisse der visuellen Beurteilung der beschichteten Fasern auf dem schwarzen Papier bzw. unter dem Mikroskop

| Bindemittel | Feinstaubanteil auf schwarzem Papier | mikroskopische Beurteilung |
|---|---|---|
| Dispersion 1 | kein Feinstaubanteil erkennbar | gleichmäßige Verteilung auf den Fasern |
| Dispersion 2 | kein Feinstaubanteil erkennbar | gleichmäßige Verteilung auf den Fasern |
| Vergleichslösung | kein Feinstaubanteil erkennbar | gleichmäßige Verteilung auf den Fasern |
| Vergleichsdispersion | hoher Feinstaubanteil | kaum Bindemittel auf der Faser erkennbar; separates Pulver |

Untersuchung der mechanischen Eigenschaften

Mit den aus der Blowline gemäß der vorgenannten Versuchsdurchführung erhaltenen Fasern wurden 2 mm dicke 51x51cm-Faserplatten mit einer Dichte von 0,95 g/$cm^3$ hergestellt. Hierzu wurden 494 g der erhaltenen Fasern gleichmäßig in einen waagrecht stehenden Holzrahmen mit den Innenmaßen 51x51x30 cm (L/B/H) eingestreut. Daran anschließend wurde auf den im Holzrahmen befindlichen Faserflor waagrecht eine 51x51 cm-Holzplatte gelegt und dieser mit einem mittigen Stempel auf eine Höhe von 5 cm vorverdichtet. Der so erhaltene Faserkuchen wurde anschließend aus dem Holzrahmen genommen, auf beiden quadratischen Flächen mit einem Trennpapier abgedeckt und zwischen zwei 10 mm dicken waagrechten Trennblechen bei 200 °C unter Druck mit einer Pressrate von 10 Sekunden pro Millimeter auf eine Dicke von 2 mm verdichtet, wobei jeweils die untere Seite des Faserkuchens auf die untere waagrechte Trennplatte gelegt wurde. Daran anschließend ließ man die erhaltenen Faserplatten außerhalb der Druckpresse auf Raumtemperatur abkühlen.

Die so erhaltenen Faserplatten werden abhängig vom verwendeten Bindemittel FPD1 (Faserplatte mit Dispersion D1), FPD2 (Faserplatte mit Dispersion D2), FPVL (Faserplatte mit Vergleichslösung) sowie FPVD (Faserplatte mit Vergleichsdispersion) genannt.

Mit den erhaltenen Faserplatten wurden folgende Prüfungen durchgeführt: Visuelle Beurteilung des Sedimentationsverhalten und Bestimmung des E-Moduls

Dabei erfolgte die Prüfung auf das Sedimentationsverhalten dergestalt, dass die Ober- und die Unterseite der jeweiligen Platte visuell beurteilt wurden. Bei nicht vorhandener

Sedimentation, gleichbedeutend mit gutem Aufziehverhalten des Bindemittels auf die Fasern sahen die Ober- und die Unterseite der erhaltenen Platten gleich aus. Bei schlechtem Aufziehverhalten des Bindemittels auf die Fasern setzte sich beim Einstreuen der aus der Blowline erhaltenen Fasern in den oben genannten Holzkasten vermehrt Feinstaub auf der Unterseite des Faserkuchens ab. Nach dem Pressvorgang zeigten dann die erhaltenen Platten auf der Oberseite eine grobe Faserstruktur und eine schlechte Verklebung der Fasern untereinander, während auf der Unterseite die Fasern in das Bindemittel eingebettet waren und sich dabei glatte Oberflächen ausbildeten. Die dabei mit den jeweiligen Platten erhaltenen Ergebnisse sind in Tabelle 2 aufgelistet.

Die Bestimmung des E-Moduls erfolgte entsprechend der Norm ISO 14125W4. Die dabei mit den verschiedenen Bindemitteln hergestellten Platten erhaltenen Ergebnisse (Mittelwert aus jeweils 3 Bestimmungen) sind ebenfalls in Tabelle 2 aufgelistet.

Tabelle 2: Ergebnisse des Sedimentationsverhaltens sowie der Bestimmung des E-Moduls

| Faserplatten | Sedimentationsverhalten | E-Modul [mPas] |
|---|---|---|
| FPD1 | keine Sedimentation erkennbar | 3370 |
| FPD2 | keine Sedimentation erkennbar | 3420 |

(fortgesetzt)

| Faserplatten | Sedimentationsverhalten | E-Modul [mPas] |
|---|---|---|
| FPVL | keine Sedimentation erkennbar | 3190 |
| FPVD | deutliche Sedimentation erkennbar | 980 |

Verformung von Prüfkörpern

Aus den vorgenannten Faserplatten FPD1, FPD2, FPVL und FPVD wurden bei Raumtemperatur jeweils drei 10x15 cm-Prüfkörper ausgesägt. Diese Prüfkörper wurden dann für 1 Minute in einen auf 200 °C aufgeheizten Wärmeschrank gelegt. Daran anschließend wurden die erwärmten Prüfkörper rasch in eine kalte Pressform eingelegt, deren eine Seite eine Ausbuchtung in Form eines Halbzylinders mit einem Radius von 12,5 mm und deren andere Seite eine Einbuchtung in Form eines Halbzylinders mit einem Radius von 14,5 mm aufwies, und versucht die Prüfkörper einzupressen. Nach 2 Minuten waren die Prüfkörper auf Raumtemperatur abgekühlt und konnten aus der Form entnommen werden. Anschließend wurden die erhaltenen Prüfkörper visuell beurteilt. Dabei zeigte sich, dass die aus den Faserplatten FPD1 und FPD2 erhaltenen Prüfkörper sich leicht an die Halbrundungen der Form anpassen ließen, wobei halbrunde Prüfkörper entstanden, deren äußeren und innere Oberflächen keinerlei Risse aufwiesen. Auch die aus der Faserplatte FPVD erhaltenen Prüfkörper ließen sich an die Oberfläche der kalten, halbrunden Form anpressen, wobei jedoch die nach dem Abkühlen erhaltenen halbrunden Prüfkörper deutliche Rissbildung auf der äußeren Oberfläche zeigte, welche schon bei der planaren Pressung die grobe Faserstruktur und schlechte Verklebung aufwies. Die aus der Faserplatte FPVL erhaltenen Prüfkörper waren hart und spröde. Beim Versuch die entsprechenden Prüfkörper in die Form zu pressen, brachen die Prüfkörper jeweils an den Scheitelpunkten der Halbradien.

## Patentansprüche

1. Verfahren zur Herstellung eines thermoverformbaren Polymer/Faser-Komposits unter Verwendung eines faserförmigen Substrats und eines Polymeren P, wobei

    • das faserförmige Substrat in einen Gasstrom eingebracht wird, danach
    • das faserförmige Substrat im Gasstrom mit einer wässrigen Dispersion eines Polymeren P mit einer Glasübergangstemperatur Tg in Kontakt gebracht wird, danach
    • das mit der wässrigen Dispersion des Polymeren P in Kontakt gebrachte faserförmige Substrat im Gasstrom getrocknet und anschließend abgeschieden wird, danach
    • das erhaltene abgeschiedene faserförmige Substrat in einen Faserflor überführt wird, und danach
    • der erhaltene Faserflor bei einer Temperatur ≥ Tg zu einem thermoverformbaren Polymer/Faser-Komposit verdichtet wird, wobei sich die Dichte des Polymer/Faser-Komposits im Vergleich zum entsprechenden Faserflor um einen Faktor ≥ 3 erhöht,

    **dadurch gekennzeichnet, dass** die wässrige Dispersion des Polymeren P durch radikalische initiierte Emulsionspolymerisation eines Gemisches von ethylenisch ungesättigten Monomeren P [Monomere P] in einem wässrigen Medium in Gegenwart eines Polymeren A erfolgt, wobei das Polymere A aus

    a) 80 bis 100 Gew.-% wenigstens einer ethylenisch ungesättigten Mono- und/oder Dicarbonsäure [Monomere A1] und
    b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

    und wobei die Monomeren P in Art und Menge so gewählt werden, dass das erhaltene Polymer P eine Glasübergangstemperatur Tg ≥ 20 °C gemessen nach DIN EN ISO 11357-2 (2013-09) aufweist und wobei unter einem faserförmigen Substrat solche Partikel verstanden werden, deren Verhältnis von ihrer längsten Ausdehnung zu ihrer kürzesten Ausdehnung wenigstens ≥ 5 beträgt.

2. Verfahren nach Anspruch 1, **dadurch gekennzeichnet, dass** das Gewichtsverhältnis von Polymeren P zu Polymeren A ≥ 1 und ≤ 10 ist.

3. Verfahren nach Anspruch 1 oder 2, **dadurch gekennzeichnet, dass** das Polymere A ein zahlenmittleres Molekulargewicht ≥ 2000 und ≤ 20000 g/mol aufweist.

4. Verfahren nach einem der Ansprüche 1 bis 3, **dadurch gekennzeichnet, dass** das Polymer A zu ≥ 95 Gew.-% aus Monomeren A1 aufgebaut ist.

5. Verfahren nach einem der Ansprüche 1 bis 4, **dadurch gekennzeichnet, dass** als Monomere A1 Acrylsäure, Methacrylsäure, Maleinsäure und/oder Maleinsäureanhydrid eingesetzt werden.

6. Verfahren nach einem der Ansprüche 1 bis 5, **dadurch gekennzeichnet, dass** die Monomeren P zu ≥ 90 Gew.-% ausgewählt sind aus der Gruppe umfassend Olefine, vinylaromatische Monomere, Vinylhalogenide, Ester aus Vinylalkohol und 1 bis 18 C-Atome aufweisenden Monocarbonsäuren, Ester aus 3 bis 6 C-Atome aufweisenden α,β-monoethylenisch ungesättigten Mono- und Dicarbonsäuren mit 1 bis 12 C-Atome aufweisenden Alkanolen, Nitrile α,β-monoethylenisch ungesättigter Carbonsäuren sowie $C_{4-8}$-konjugierte Diene und zu ≤ 10 Gew.-% ausgewählt sind aus der Gruppe umfassend 3 bis 6 C-Atome aufweisende α,β-monoethylenisch ungesättigte Mono- und Dicarbonsäuren und deren Amide, sowie monoethylenisch ungesättigte Verbindungen, welche wenigstens eine Amino-, Epoxy-, Hydroxy-, N-Methylol- oder Carbonylgruppe aufweisen und Verbindungen, welche wenigstens zwei nicht konjugierte ethylenisch ungesättigte Doppelbindungen aufweisen.

7. Verfahren nach einem der Ansprüche 1 bis 6, **dadurch gekennzeichnet, dass** zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 10,0 Gew.-% | Acrylsäure, Methacrylsäure, Glycidylacrylat, Glycidylmethacrylat, 2-Hydroxyethyl-, 2-Hydroxypropyl- und 3-Hydroxypropyl-, 2-Aminoethyl-, 2-Aminopropyl- und 3-Aminopropylacrylat und -methacrylat, 1,4-Butylenglykoldiacrylat und -methacrylat, 1,2-, 1,3- und 1,4-Divinylbenzol, Allylacrylat und/oder Allylmethacrylat |

eingesetzt werden, wobei sich die Mengen zu 100 Gew.-% aufsummieren.

8. Verfahren nach einem der Ansprüche 1 bis 7, **dadurch gekennzeichnet, dass** zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat |

eingesetzt werden, wobei sich die Mengen zu 100 Gew.-% aufsummieren.

9. Verfahren nach einem der Ansprüche 1 bis 8, **dadurch gekennzeichnet, dass** zur Herstellung des Polymeren P

| | |
|---|---|
| ≥ 90 und ≤ 99,7 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 5,0 Gew.-% | Acrylsäure, Methacrylsäure, 2-Hydroxyethyl-, 2-Hydroxypropyl- und 3-Hydroxypropyl-, 2-Aminoethyl-, 2-Aminopropyl- und 3-Aminopropylacrylat und/oder - methacrylat, |
| ≥ 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat, sowie |
| ≥ 0,1 und ≤ 3,0 Gew.-% | Glycidylacrylat und/oder Glycidylmethacrylat, |

eingesetzt werden, wobei sich die Mengen zu 100 Gew.-% aufsummieren.

**10.** Verfahren nach einem der Ansprüche 1 bis 9, **dadurch gekennzeichnet, dass** als faserförmiges Substrat eine Naturfaser eingesetzt wird.

**11.** Verfahren nach einem der Ansprüche 1 bis 10, **dadurch gekennzeichnet, dass** das erhaltene thermoverformbare Polymer/Faser-Komposit ein Flächengewicht ≥ 1000 und ≤ 30000 g/$m^2$ aufweist.

**12.** Verfahren nach einem der Ansprüche 1 bis 11, **dadurch gekennzeichnet, dass** das erhaltene thermoverformbare Polymer/Faser-Komposit flächenförmig ist.

**13.** Thermoverformbares Polymer/Faser-Komposit erhältlich nach einem Verfahren gemäß einem der Ansprüche 1 bis 12.

**14.** Verwendung eines thermoverformbaren Polymer/Faser-Komposits gemäß Anspruch 13 zur Herstellung eines Polymer/Faser-Formteils, welches sich in seiner Form vom eingesetzten thermoverformbaren Polymer/Faser-Komposit unterscheidet.

**15.** Verfahren zur Herstellung eines Polymer/Faser-Formteils, **dadurch gekennzeichnet, dass** ein thermoverformbares Polymer/Faser-Komposit gemäß Anspruch 13 auf eine Temperatur ≥ Tg aufgeheizt wird, das so erhaltene Polymer/Faser-Komposit bei einer Temperatur ≥ Tg in die gewünschte Form des Polymer/Faser-Formteils gebracht wird und danach das erhaltene Polymer/Faser-Formteil unter Beibehaltung seiner Form auf eine Temperatur < Tg abgekühlt wird.

**16.** Verfahren nach Anspruch 15, **dadurch gekennzeichnet, dass** vor oder nach dem Aufheizschritt ein flächenförmiges Dekormaterial auf das Polymer/Faser-Komposit aufgebracht wird.

**17.** Polymer/Faser-Formteil erhältlich nach einem Verfahren gemäß Anspruch 15 oder 16.

**18.** Verwendung eines Polymer/Faser-Formteils gemäß Anspruch 17 als Möbelformteil oder Wanddekorteil.

## Claims

**1.** A process for producing a thermoformable polymer/fiber composite using a fibrous substrate and a polymer P, where

• the fibrous substrate is introduced into a gas stream, then
• the fibrous substrate in the gas stream is contacted with an aqueous dispersion of a polymer P having a glass transition temperature Tg, then
• the fibrous substrate that has been contacted with the aqueous dispersion of the polymer P is dried in a gas stream and then deposited, then
• the deposited fibrous substrate obtained is converted to a fiber web, and then
• the fiber web obtained is consolidated at a temperature ≥ Tg to give a thermoformable polymer/fiber composite, increasing the density of the polymer/fiber composite by a factor of
≥ 3 compared to the corresponding fiber web,

which comprises effecting the aqueous dispersion of the polymer P by free-radically initiated emulsion polymerization of a mixture of ethylenically unsaturated monomers P [monomers P] in an aqueous medium in the presence of a polymer A, where the polymer A is formed from

a) 80% to 100% by weight of at least one ethylenically unsaturated mono- and/or dicarboxylic acid [monomers A1] and
b) 0% to 20% by weight of at least one further ethylenically unsaturated monomer which differs from the monomers A1 [monomers A2], in copolymerized form,

and where the monomers P are chosen in terms of type and amount such that the polymer P obtained has a glass transition temperature Tg ≥ 20°C measured according to DIN EN ISO 11357-2 (2013-09), and where a fibrous substrate is understood to mean those particles having a ratio of their longest dimension to their shortest dimension

of at least ≥ 5.

2. The process according to claim 1, wherein the weight ratio of polymers P to polymers A is ≥ 1 and ≤ 10.

3. The process according to claim 1 or 2, wherein the polymer A has a number-average molecular weight of ≥ 2000 and ≤ 20 000 g/mol.

4. The process according to any of claims 1 to 3, wherein the polymer A is formed to an extent of ≥ 95% by weight from monomers A1.

5. The process according to any of claims 1 to 4, wherein the monomers A1 used are acrylic acid, methacrylic acid, maleic acid and/or maleic anhydride.

6. The process according to any of claims 1 to 5, wherein the monomers P are selected to an extent of ≥ 90% by weight from the group comprising olefins, vinylaromatic monomers, vinyl halides, esters of vinyl alcohol and monocarboxylic acids having 1 to 18 carbon atoms, esters of α,β-monoethylenically unsaturated mono- and dicarboxylic acids having 3 to 6 carbon atoms with alkanols having 1 to 12 carbon atoms, nitriles of α, β-monoethylenically unsaturated carboxylic acids and $C_{4-8}$-conjugated dienes, and are selected to an extent of ≤ 10% by weight from the group comprising α,β-monoethylenically unsaturated mono- and dicarboxylic acids having 3 to 6 carbon atoms and amides thereof, and also monoethylenically unsaturated compounds having at least one amino, epoxy, hydroxyl, N-methylol or carbonyl group and compounds having at least two nonconjugated ethylenically unsaturated double bonds.

7. The process according to any of claims 1 to 6, wherein the polymer P is prepared using

| | |
|---|---|
| ≥ 90% and ≤ 99.9% | by weight of styrene and/or methyl methacrylate, |
| ≥ 0% and ≤ 9.9% | by weight of n-butyl acrylate and/or 2-ethylhexyl acrylate, and |
| ≥ 0.1% and ≤ 10.0% | by weight of acrylic acid, methacrylic acid, glycidyl acrylate, glycidyl methacrylate, 2-hydroxyethyl, 2-hydroxypropyl and 3-hydroxypropyl acrylate and methacrylate, 2-aminoethyl, 2-aminopropyl and 3-aminopropyl acrylate and methacrylate, butylene 1,4-glycol diacrylate and methacrylate, 1,2-, 1,3- and 1,4-divinylbenzene, allyl acrylate and/or methacrylate, allyl |

where the amounts add up to 100% by weight.

8. The process according to any of claims 1 to 7, wherein the polymer P is prepared using

| | |
|---|---|
| ≥ 90% and ≤ 99.9% | by weight of styrene and/or methyl methacrylate, |
| ≥ 0% and ≤ 9.9% | by weight of n-butyl acrylate and/or 2-ethylhexyl acrylate, and |
| ≥ 0.1% and ≤ 2.0% | by weight of butylene 1,4-glycol diacrylate and -methacrylate, 1,2-, 1,3- and 1,4-divinylbenzene, allyl acrylate and/or allyl methacrylate, |

where the amounts add up to 100% by weight.

9. The process according to any of claims 1 to 8, wherein the polymer P is prepared using

| | |
|---|---|
| ≥ 90% and ≤ 99.7% | by weight of styrene and/or methyl methacrylate, |
| ≥ 0% and ≤ 9.9% | by weight of n-butyl acrylate and/or 2-ethylhexyl acrylate, and |
| ≥ 0.1% and ≤ 5.0% | by weight of acrylic acid, methacrylic acid, 2-hydroxyethyl, 2-hydroxypropyl and 3-hydroxypropyl acrylate and methacrylate, 2-aminoethyl, 2-aminopropyl and 3-aminopropyl acrylate and/or methacrylate, |
| ≥ 0.1% and ≤ 2.0% | by weight of butylene 1,4-glycol diacrylate and -methacrylate, 1,2-, 1,3- and 1,4-divinylbenzene, allyl acrylate and/or allyl methacrylate, and |
| ≥ 0.1% and ≤ 3.0% | by weight of glycidyl acrylate and/or glycidyl methacrylate, |

where the amounts add up to 100% by weight.

**10.** The process according to any of claims 1 to 9, wherein the fibrous substrate used is a natural fiber.

**11.** The process according to any of claims 1 to 10, wherein the thermoformable polymer/fiber composite obtained has a basis weight of ≥ 1000 and ≤ 30 000 g/m$^2$.

**12.** The process according to any of claims 1 to 11, wherein the thermoformable polymer/fiber composite obtained is two-dimensional.

**13.** A thermoformable polymer/fiber composite obtainable by a process according to any of claims 1 to 12.

**14.** The use of a thermoformable polymer/fiber composite according to claim 13 for production of a polymer/fiber molding which differs in shape from the thermoformable polymer/fiber composite used.

**15.** A process for producing a polymer/fiber molding, which comprises heating a thermoformable polymer/fiber composite according to claim 13 up to a temperature ≥ Tg, converting the polymer/fiber composite thus obtained at a temperature ≥ Tg to the desired shape of the polymer/fiber molding and then cooling the polymer/fiber molding obtained down to a temperature < Tg while retaining its shape.

**16.** The process according to claim 15, wherein the heating step is preceded or followed by application of a two-dimensional decorative material to the polymer/fiber composite.

**17.** A polymer/fiber molding obtainable by a process according to claim 15 or 16.

**18.** The use of a polymer/fiber molding according to claim 17 as a furniture molding or wall decor part.

## Revendications

**1.** Procédé pour la préparation d'un composite polymère thermoformable/fibre par l'utilisation d'un substrat fibreux et d'un polymère P,

- le substrat fibreux étant introduit dans un flux de gaz, ensuite
- le substrat fibreux dans le flux de gaz étant mis en contact avec une dispersion aqueuse d'un polymère P doté d'une température de transition vitreuse Tv, ensuite
- le substrat fibreux mis en contact avec la dispersion aqueuse du polymère P dans le flux de gaz étant séché et ensuite séparé, ensuite
- le substrat fibreux séparé obtenu étant transformé en voile de carde, et ensuite
- le voile de carde obtenu étant densifié à une température ≥ Tv en un composite polymère thermoformable/fibre, la densité du composite polymère/fibre par rapport au voile de carde correspondant étant augmentée d'un facteur ≥ 3,

**caractérisé en ce que** la dispersion aqueuse du polymère P est réalisée par polymérisation en émulsion initiée par voie radicalaire d'un mélange de monomères éthyléniquement insaturés P [monomères P] dans un milieu aqueux en présence d'un polymère A, le polymère A étant formé à partir de

a) 80 à 100 % en poids d'au moins un acide monocarboxylique et/ou dicarboxylique éthyléniquement insaturé [monomères A1] et
b) 0 à 20 % en poids d'au moins un monomère éthyléniquement insaturé supplémentaire, qui est différent des monomères A1 [monomères A2], sous forme polymérisée,

les monomères P étant choisis en nature et en quantité de telle façon que le polymère P obtenu présente une température de transition vitreuse Tv ≥ 20 °C mesurée selon la norme DIN EN ISO 11357-2 (2013-09) et par les termes « substrat fibreux », on entend les particules dont le rapport de leur extension la plus longue sur leur extension la plus courte est d'au moins ≥ 5.

**2.** Procédé selon la revendication 1, **caractérisé en ce que** le rapport pondéral des polymères P aux polymères A

est $\geq$ 1 et $\leq$ 10.

**3.** Procédé selon la revendication 1 ou 2, **caractérisé en ce que** le polymère A présente un poids moléculaire moyen en nombre $\geq$ 2 000 et $\leq$ 20 000 g/mole.

**4.** Procédé selon l'une quelconque des revendications 1 à 3, **caractérisé en ce que** le polymère A est formé à partir de $\geq$ 95 % en poids de monomères A1.

**5.** Procédé selon l'une quelconque des revendications 1 à 4, **caractérisé en ce qu'**en tant que monomères A1, l'acide acrylique, l'acide méthacrylique, l'acide maléique et/ou l'anhydride maléique sont utilisés.

**6.** Procédé selon l'une quelconque des revendications 1 à 5, **caractérisé en ce que** les monomères P sont choisis à raison de $\geq$ 90 % en poids dans le groupe comprenant des oléfines, des monomères vinylaromatiques, des halogénures de vinyle, des esters d'alcool vinylique et d'acides monocarboxyliques présentant 1 à 18 atome(s) de C, des esters d'acides monocarboxyliques et dicarboxyliques monoéthyléniquement $\alpha,\beta$-insaturés présentant 3 à 6 atomes de C avec des alcanols présentant 1 à 12 atome (s) de C, des nitriles d'acides carboxyliques monoéthyléniquement $\alpha,\beta$-insaturés ainsi que des diènes $C_{4-8}$-conjugués et sont choisis à raison de $\leq$ 10 % en poids dans le groupe comprenant des acides monocarboxyliques et dicarboxyliques monoéthyléniquement $\alpha,\beta$-insaturés présentant 3 à 6 atomes de C et leurs amides, ainsi que des composés monoéthyléniquement insaturés, qui présentent au moins un groupe amino, époxy, hydroxy, N-méthylol ou carbonyle et des composés qui présentent au moins deux doubles liaisons éthyléniquement insaturées non conjuguées.

**7.** Procédé selon l'une quelconque des revendications 1 à 6, **caractérisé en ce que** pour la préparation du polymère P
$\geq$ 90 et $\leq$ 99, 9 % en poids de styrène et/ou de méthacrylate de méthyle,
$\geq$ 0 et $\leq$ 9, 9 % en poids d'acrylate de n-butyle et/ou d'acrylate de 2-éthylhexyle, et
$\geq$ 0,1 et $\leq$ 10,0 % en poids d'acide acrylique, d'acide méthacrylique, d'acrylate de glycidyle, de méthacrylate de glycidyle, d'acrylate et de méthacrylate de 2-hydroxyéthyle, de 2-hydroxypropyle et de 3-hydroxypropyle, de 2-aminoéthyle, de 2-aminopropyle et de 3-aminopropyle, de diacrylate et de diméthacrylate de 1,4-butylèneglycol, de 1,2-, de 1,3- et de 1,4-divinylbenzène, d'acrylate d'allyle et/ou de méthacrylate d'allyle
sont utilisés, les quantités s'additionnant jusqu'à 100 % en poids.

**8.** Procédé selon l'une quelconque des revendications 1 à 7, **caractérisé en ce que** pour la préparation du polymère P
$\geq$ 90 et $\leq$ 99, 9 % en poids de styrène et/ou de méthacrylate de méthyle,
$\geq$ 0 et $\leq$ 9, 9 % en poids d'acrylate de n-butyle et/ou d'acrylate de 2-éthylhexyle, et
$\geq$ 0,1 et $\leq$ 2,0 % en poids de diacrylate et de diméthacrylate de 1,4-butylèneglycol, de 1,2-, de 1,3- et de 1,4-divinylbenzène, d'acrylate d'allyle et/ou de méthacrylate d'allyle
sont utilisés, les quantités s'additionnant jusqu'à 100 % en poids.

**9.** Procédé selon l'une quelconque des revendications 1 à 8, **caractérisé en ce que** pour la préparation du polymère P
$\geq$ 90 et $\leq$ 99,7 % en poids de styrène et/ou de méthacrylate de méthyle,
$\geq$ 0 et $\leq$ 9, 9 % en poids d'acrylate de n-butyle et/ou d'acrylate de 2-éthylhexyle, et
$\geq$ 0,1 et $\leq$ 5,0 % en poids d'acide acrylique, d'acide méthacrylique, d'acrylate et de méthacrylate de 2-hydroxyéthyle, de 2-hydroxypropyle et de 3-hydroxypropyle, de 2-aminoéthyle, de 2-aminopropyle et de 3-aminopropyle,
$\geq$ 0,1 et $\leq$ 2,0 % en poids de diacrylate et de diméthacrylate de 1,4-butylèneglycol, de 1,2-, de 1,3- et de 1,4-divinylbenzène, d'acrylate d'allyle et/ou de méthacrylate d'allyle ainsi que
$\geq$ 0, 1 et $\leq$ 3, 0 % en poids d'acrylate de glycidyle et/ou de méthacrylate de glycidyle,
sont utilisés, les quantités s'additionnant jusqu'à 100 % en poids.

**10.** Procédé selon l'une quelconque des revendications 1 à 9, **caractérisé en ce qu'**en tant que substrat fibreux une fibre naturelle est utilisée.

**11.** Procédé selon l'une quelconque des revendications 1 à 10, **caractérisé en ce que** le composite polymère thermoformable/fibre obtenu présente un poids surfacique $\geq$ 1 000 et $\leq$ 30 000 $g/m^2$.

**12.** Procédé selon l'une quelconque des revendications 1 à 11, **caractérisé en ce que** le composite polymère thermoformable/fibre obtenu est plan.

**13.** Composite polymère thermoformable/fibre pouvant être obtenu par un procédé selon l'une quelconque des revendications 1 à 12.

**14.** Utilisation d'un composite polymère thermoformable/fibre selon la revendication 13 pour la préparation d'un corps moulé polymère/fibre, qui se différencie de par sa forme du composite polymère thermoformable/fibre utilisé.

**15.** Procédé pour la préparation d'un corps moulé polymère/fibre, **caractérisé en ce qu'**un composite polymère thermoformable/fibre selon la revendication 13 est chauffé à une température ≥ Tv, le composite polymère/fibre ainsi obtenu est amené dans la forme souhaitée du corps moulé polymère/fibre à une température ≥ Tv et ensuite le corps moulé polymère/fibre obtenu est refroidi à une température < Tv avec conservation de sa forme.

**16.** Procédé selon la revendication 15, **caractérisé en ce qu'**avant ou après l'étape de chauffage, un matériau décoratif plat est appliqué sur le composite polymère/fibre.

**17.** Corps moulé polymère/fibre pouvant être obtenu par un procédé selon la revendication 15 ou 16.

**18.** Utilisation d'un corps moulé polymère/fibre selon la revendication 17 comme corps moulé de meuble ou comme élément décoratif mural.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 200773218 A
- US 4269749 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- EP 40419 B
- EP 567812 A
- EP 614922 A
- DE 4213965 A


### In der Beschreibung aufgeführte Nicht-Patentliteratur


- **A. ECHTE.** Handbuch der Technischen Polymerchemie. VCH, 1993
- **B. VOLLMERT.** Grundriss der Makromolekularen Chemie. E. Vollmert Verlag, 1988, vol. 1
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- Encyclopedia of Polymer Science and Engineering. 1987, vol. 8, 659
- **D.C. BLACKLEY.** *High Polymer Latices,* 1966, vol. 1, 35
- **H. WARSON.** The Applications of Synthetic Resin Emulsions. 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Encyclopedia of Polymer Science and Technology. John Wiley & Sons Inc, 1966, vol. 5, 847
- **T.G. FOX.** *Bull. Am. Phys. Soc.,* 1956, 123
- gemäß Ullmann's Encyclopädie der technischen Chemie. Verlag Chemie, 1980, vol. 19, 18
- **J. BRANDRUP, E.H.** Immergut, Polymer Handbook. J. Wiley, 1966
- IMMERGUT, POLYMER HANDBOOK. J. Wiley, 1975
- IMMERGUT, POLYMER HANDBOOK. J. Wiley, 1989
- Ullmann's Encyclopedia of Industrial Chemistry. Verlag Chemie, 1992, 169